# EUROPÄISCHE PATENTANMELDUNG

(11) **EP 1 172 769 A2**
(43) Veröffentlichungstag der Anmeldung: **16.01.2002**
(21) Anmeldenummer: 01116504.0
(22) Anmeldetag: 07.07.2001
(51) Int. Cl.: G07C 5/12, G07C 7/00

(54) **Fahrtschreiber mit einem flachen, quaderförmigen Gehäuse**

(30) Priorität: 14.07.2000 DE 20012208 U
(71) Anmelder: Mannesmann VDO Aktiengesellschaft, 60388 Frankfurt am Main (DE)
(72) Erfinder: Kirner, Herbert, Dipl.-Ing. (FH), 78052 Villingen-Schwenningen (DE)

(57) **Zusammenfassung**

Bei einem als Einbaugerät konzipierten Fahrtschreiber mit in Richtung der Hochachse des quaderförmigen Gehäuses (1) zugänglichen Steckerfassungen wird vorgeschlagen wenigstens die Deckelplatte (7) und die Rückwand (4) des Gehäuses (1) freizusparen und eine in Entnahmerichtung der Stecker (23) unlösbar mit dem Gehäuse (1) verbindbare Abdeckkappe (19) vorzusehen, die die von den Steckern (23) ausgehenden Leitungen (22) in Richtung des rückwandseitigen Bereichs der Freisparung, der Öffnung (21), umlenkt.

## Beschreibung

Die Erfindung betrifft einen Fahrtschreiber mit einem flachen, quaderförmigen Gehäuse, in welchem eine Leiterplatte weitgehend formatfüllend befestigt ist und mit der Leiterplatte in Richtung der Hochachse des Gehäuses Kontaktzungen verbunden sind, wobei den Kontaktzungen ein auf der Leiterplatte befestigter, mit mehreren Steckerfassungen versehener Steckersockel zugeordnet ist und in dem Gehäuse eine den Zugang zum Steckersockel ermöglichende Freisparung ausgebildet ist und bei welchem Stecker mit geradem Abgang der mit den Kontaktbuchsen der Stecker verbundenen Leitungen Anwendung finden.

Ein solches bauliches Gerätekonzept bietet ein Minimum an Herstellungs- und Montageaufwand, das heißt, die Montage der Bauteile, insbesondere auch das Anbringen der Stecker kann in einer Richtung erfolgen, und zwar in Richtung der Hochachse des Gehäuses, wo ohnehin günstigere räumliche Montagebedingungen gegeben sind als an einer Schmalseite des Gehäuses. Hinzu kommt, dass bei diesem Gerätekonzept die Leiterplatte durch die beim Setzen oder Zielen der Stecker wirkenden Kräfte nicht in Richtung der Plattenebene belastet wird, wobei Verbiegungen nicht ausgeschlossen werden können, sondern in Richtung quer zur Plattenebene in der die Leiterplatte mit einfachen Mitteln ausreichend abstützbar ist.

In der Regel finden gattungsgemäße Fahrtschreiber als Einbaugeräte Anwendung, wobei lediglich an einer Schmalseite eines derartigen Gerätes Anzeige- und Betätigungsmittel beobachtbar bzw. zugänglich sind und der Einbau beispielsweise in einer Armaturentafel oder einer Instrumentenkonsole mittels eines das Gerät relativ eng umschließenden und somit das Gerät halternden Einbaurahmens erfolgt. Das heißt, dass beim Einführen des Gerätes in den Einbaurahmen sowie beim Entnehmen des Gerätes zu Test- und/oder Reparaturzwecken die Isolation von Leitungen, die in Richtung der Hochachse vom Gerät abstehen, beschädigt werden können. Mit anderen Worten, die Leitungen müssen vor dem Einbau des Gerätes in Richtung der Rückwand umgebogen und in dieser Lage gesichert werden.

Bei gattungsgemäß konzipierten Fahrtschreibern bereitet diese Maßnahme erheblich Schwierigkeiten, da zwischen der Austrittsebene der Leitungen an den Steckern und der Ebene des Deckels ein relativ geringer Abstand besteht und außerdem eine Vielzahl von Leitungen ausgerichtet werden müssen, wobei im Falle eines Fahrtschreibers beispielsweise vier achtpolige Stecker vorgesehen sind und somit auch bei einer nur teilweiser Belegung der Stecker ein wenig handliches Leitungsbündel mit nach einem im wesentlichen rechtwinkligen Abbiegen erheblicher Rückbildungsneigung gegeben ist. Hinzu kommt, dass sich beim Einsetzen eines Fahrtschreibers in den Einbaurahmen die an der Rückseite der betreffenden Armaturentafel bereits verlegten Leitungen stauchen kommen und dadurch zusätzliche Kräfte an der Halterung der Leitungen am Fahrtschreiber wirksam werden.

Aufgabe der vorliegenden Erfindung war es daher, für das gattungsgemäße Gerätekonzept eine Halterung zu schaffen, die unter den gegebenen Bedingungen eine gute Integration mit dem Gehäuse bietet und ein sicheres Niederhalten der Leitungen bei möglichst einfacher Montage gewährleistet.

Die Lösung dieser Aufgabe sieht vor, dass die Freisparung im Gehäuse derart ausgebildet ist, dass sie wenigstens in die Rückwand und in den Deckel des Gehäuses mit rechteckförmigen Ausschnitten eingreift, dass eine mit dem Gehäuse verbindbare Abdeckkappe vorgesehen ist derart, dass nach dem Anbringen der Abdeckkappe an dem Gehäuse die Freisparung deckelseitig abgedeckt und rückwandseitig weitgehend offen ist und dass an der Abdeckkappe und an dem Gehäuse einander zugeordnete Haltemittel derart ausgebildet sind, dass die Abdeckkappe in Entnahmerichtung der Stecker unlösbar mit dem Gehäuse verbindbar ist.

Im einzelnen ist bezogen auf das Gehäuse vorgesehen, dass innerhalb der Freisparung in das Gehäuse hineinragende Leisten ausgebildet sind derart, dass eine erste Leiste am deckelseitigen Ausschnitt der Freisparung rückwandparallel und eine zweite Leiste am rückwandseitigen Ausschnitt der Freisparung deckelparallel angeordnet ist.

Eine bevorzugte Ausgestaltung der Abdeckkappe ist dadurch gekennzeichnet, dass die Abdeckkappe aus einer im wesentlichen rechteckförmigen Deckplatte mit wenigstens an drei Seiten ausgeformten Wandelemente besteht, dass an dem quer zu zwei parallelen Wandelementen ausgebildeten Wandelement nach außen weisende Rastnasen vorgesehen sind und dass in einer zu dem die Rastnasen tragenden Wandelement parallelen Ebene an den sich gegenüberstehenden Wandelementen gegeneinander weisende Haken angeformt sind.

Die gefundene Lösung stellt eine besonders einfache Maßnahme dar, die bei Nutzung des geschilderten optimalen Bau- und Montagekonzeptes eines Fahrtschreibers in Richtung der Hochachse des Gehäuses abstehenden Leitungen nach deren Umbiegen in Richtung der Rückwand in ihrer Lage niederzuhalten, so dass Beschädigungen der Isolationen der einzelnen Leiter beim Einführen des Gehäuses in den Einbaurahmen bzw. bei einer Entnahme des Gerätes ausgeschlossen sind. Erwähnenswert ist dabei die besonders einfache Montage der Abdeckkappe durch einerseits Einhängen andererseits Einrasten, was mit einer Hand erfolgen kann, aber auch die relativ einfache Demontage mittels eines Hilfswerkzeuges sowie die Tatsache, dass eine möglichst große und nicht unterteilte Öffnung an der Rückwand des Gehäuses gewährleistet, dass ein Aufteilen und Einfädeln der Leitungen in an der Abdeckkappe oder der Rückwand des Gehäuses ausgebildete, beispielsweise schlüssellochähnliche Ausnehmungen vermieden und somit eine besonders einfache Ausrichtung und Bündelung der Leitungen des Fahrtschreibers gegeben ist. Außerdem bietet die Erfindung den Vorzug, dass die Abdeckkappe sozusagen als Gehäusebauteil ausschließlich dem Gehäuse zugeordnet und an diesem gehaltert ist das heißt, dass die Lage der Leiterplatte innerhalb des Gehäuses unabhängig von der an sich den Steckern zugeordneten Abdeckkappe justierbar ist. Vorzugsweise ist die Abdeckkappe derart gestaltet, dass sie allseitig bündig mit dem Gehäuse verbindbar ist. Vorteilhaft ist ferner, dass die Haltemittel zwischen Abdeckkappe und Gehäuse aufgrund der Niederhaltefunktion der Abdeckkappe, mit anderen Worten aufgrund der Rückwirkung des Leitungsbündels auf die Abdeckkappe, lediglich so ausgebildet sein können, dass sie nur in einer Richtung wirksam sind und somit die Abdeckkappe im Wartungsfalle auch relativ leicht entfernt und ohne weiteres wieder verwendet werden kann. Andererseits ist es denkbar, dass die von den Leitungen auf die Abdeckkappe ausgeübte Kraft gering oder gar nicht gegeben ist, so dass zwischen der Abdeckkappe und dem Gehäuse zweckmäßigerweise Abmessungen vorzusehen sind, die einen spielfreien Sitz der Abdeckkappe im Gehäuse ermöglichen. Außerdem können Auflageleisten und Einsenkungen sowie gegenseitige Überlappungen von Wandelementen vorgesehen werden, um bei einem nicht ausreichend vorhandenen Leitungspolster ein Niederdrücken der Abdeckkappe in das Gerät hinein zu vermeiden. Selbstverständlich lässt sich die Abdeckkappe auch derart ausbilden, dass sie zusätzlich mit dem Gehäuse verschraubt werden kann. Nicht zwingend erforderlich ist jedoch die bisher übliche Plombierung derartiger Abdeckungen unter der Voraussetzung, dass das betreffende Fahrtschreiber/Weggeber-System mit elektronischen Mitteln für den Nachweis von Manipulationen ausgestattet ist.

Im folgenden sei die Erfindung anhand von Zeichnungen näher erläutert. Es zeigen:
- Figur 1: eine Draufsicht eines Fahrtschreibers mit der erfindungsgemäßen, die eingehenden und ausgehenden Leitungen niederhaltenden Abdeckkappe,
- Figur 2: eine teilweise Seitenansicht des Fahrtschreibers gemäß Figur 1,
- Figur 3: eine Schnittdarstellung gemäß der Schnittlinie A in Figur 1,
- Figur 4: eine perspektivische Ansicht der Abdeckkappe von oben,
- Figur 5: eine perspektivische Ansicht der Abdeckkappe von unten.

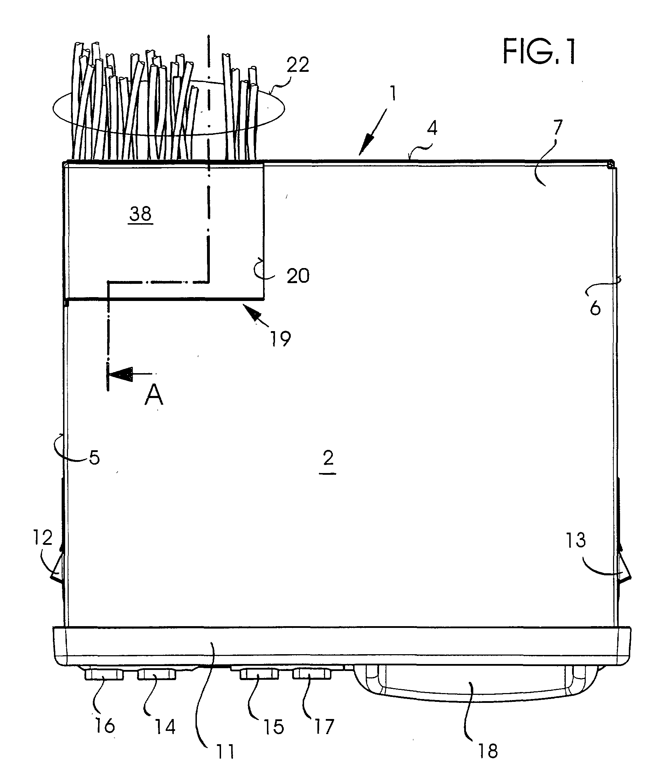

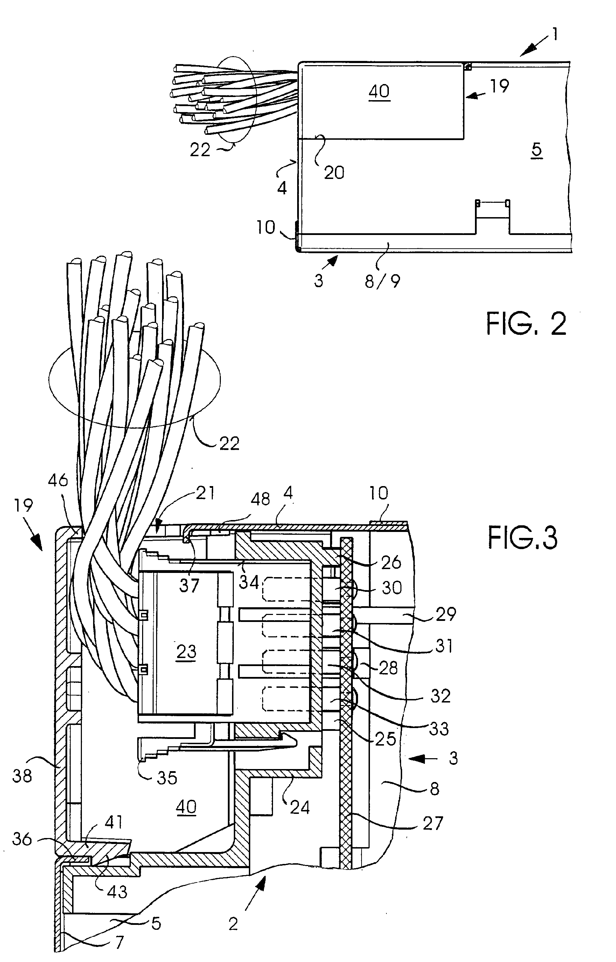

Aus der Draufsicht, Figur 1, geht der rechteckförmige Grundriss des Gehäuses 1 eines als Ausführungsbeispiel dienenden Fahrtschreibers hervor. Das Gehäuse 1 ist aus zwei vorzugsweise aus Blech gefertigten Bauteilen zusammengefügt, nämlich aus einem haubenartigen Deckelteil 2 und einem Bodenteil 3 (Figur 2). An dem Deckelteil 2 sind im wesentlichen die Rückwand 4, die Seitenwände 5 und 6 und eine Deckelplatte 7 des Gehäuses 1 ausgebildet. An dem Bodenteil 3 sind Randleisten 8, 9 und 10 angeformt, die nach dem Zusammenfügen von Bodenteil 3 und Deckelteil 2 die Seitenwände 5, 6 und die Rückwand 4 in ausreichender Weise überlappen. Das Zusammenfügen erfolgt beispielsweise mittels an den Randleisten ausgebildeter Riegel, denen, was, weil nicht erfindungswesentlich, im einzelnen nicht dargestellt ist, an den Seitenwänden 5, 6 angeformte, nach innen weisende Zungen zugeordnet sind. Frontseitig ist das Gehäuse 1 durch eine Frontwand 11 abgeschlossen. Mit 12 und 13 sind Befestigungskrallen bezeichnet, die beim Einbau des Fahrtschreibers mit in dem Einbaurahmen vorgesehenen Ausnehmungen in Wirkverbindung treten.

Bekanntlich kommen im Zusammenhang mit einem derartigen Fahrtschreiber bzw. einem Fahrtschreibersystem den Fahrern zugeordnete Datenkarten zur Erfassung der persönlichen Arbeitszeiten zur Anwendung, so dass in der Frontwand 11 Schlitze für das Eingeben der Datenkarten in die jeweiligen Lese-/Schreibaggregate des Fahrtschreibers vorgesehen sind. Mit 14 und 15 sind durch die Frontwand 11 durchgreifende Tasten bezeichnet, die beispielsweise dem Freigeben der jeweiligen Datenkarten dienen. 16 und 17 bezeichnen Tasten, die für das Anmelden der Fahrer vorgesehen sind. Eine Griffleiste 18 dient dem Handhaben eines Schlittens einer in dem Fahrtschreiber angeordneten Druckvorrichtung für den Fall, dass Aufzeichnungsmaterial nachgefüllt werden soll. Üblicherweise verfügt der Fahrtschreiber auch über ein in der Draufsicht, Figur 1, nicht sichtbares Display und weitere Tasten zum Anwählen der Arbeitszeitdaten der Fahrer und zur Druckauslösung.

Mit 19 ist eine Abdeckkappe bezeichnet, die nach außen allseitig bündig mit dem Gehäuse 1 abschließt und eine im Falle des Ausführungsbeispiels an einer Ecke des Deckelteils 2 vorgesehene Freisparung 20 schließt, und zwar bis auf eine in Figur 3 mit 21 bezeichnete rückseitige Öffnung, durch die die dem Fahrtschreiber zugeordneten Leitungen ein- bzw. herausführbar sind. Das Leitungsbündel, der beispielsweise für die Spannungsversorgung des Gerätes, die Meßwert- und Signallübertragung sowie die Ansteuerung anderer Geräte, insbesondere die Ansteuerung von Anzeigeinstrumenten erforderlichen Leitungen ist mit 22 bezeichnet.

Den Leitungen 22 sind beispielsweise vier 8-polige Stecker zugeordnet, von denen einer in der Schnittdarstellung, Figur 3, mit 23 bezeichnet ist. Der Halterung der Stecker 23 dient ein Steckersockel 24, welcher sich einerseits mittels Abstandhalter, von denen in Figur 3 zwei, 25 und 26, dargestellt sind, auf einer Leiterplatte 27 des Fahrtschreibers abstützt und welcher andererseits mittels angeformter Rasthaken, einer ist mit 28 bezeichnet, die Leiterplatte 27 hintergreift. Eine ebenfalls am Steckersockel 24 angeformte Stütze 29 dient, indem sie an der Leiterplatte 27 vorbei oder durch die Leiterplatte 27 hindurch geführt und unmittelbar dem Bodenteil 3 zugeordnet ist, der Entlastung der Leiterplatte 27 beim Setzen der Stecker 23. Mit 30, 31, 32 und 33 sind auf der Leiterplatte 27 befestigte Kontaktzungen bezeichnet, die, wenn der Steckersockel 24 auf der Leiterplatte 27 befestigt ist, durch im nicht näher bezeichneten Boden des Steckersockels 24 ausgebildete Schlitze in den Steckern 23 zugeordnete Fassungen 34 hineinragen. Dabei dient der Boden des Steckersockels 24 den auf der Leiterplatte 27 praktisch punktförmig befestigten Kontaktzungen 30, 31, 32, 33 als zusätzliche Halterung und somit der Entlastung der Lötstellen der Kontaktzungen 30, 31, 32, 33. Mit 35 ist ein wippenartig am Stecker 23 ausgeformter Riegel bezeichnet, welcher beim Setzen des Steckers 23 mit einem geeigneten am Steckersockel 24 ausgebildeten Hinterschnitt zusammenwirkt und außer der Sicherungsfunktion eine Rückmeldung für den ordnungsgemäßen Sitz des Steckers 23 liefert. Die Figur 3 zeigt außerdem eine erste an der Deckelplatte 7 des Deckelteils 2 angeformte Leiste 36 und eine zweite an der Rückwand 4 des Deckelteils 2 angeformte Leiste 37. Beide Leisten 36 und 37 dienen der Halterung der Abdeckkappe 19, insbesondere wenn diese durch das elastisch auf die Abdeckkappe 19 einwirkende Leitungspolster bzw. Leitungsbündel 22 in Richtung der Hochachse des Gehäuses 1 abgedrängt wird. Insofern dient die Abdeckkappe 19 als Niederhalter für das Leitungsbündel 22. In diesem Zusammenhang sei erwähnt, dass bei einer Gesamthöhe des Gehäuses 1 von 50 mm der Abstand zwischen der Abdeckkappe 19 und der Austrittsebene der Leitungen 22 an den Steckern 23 größenordnungsmäßig 7 mm beträgt.

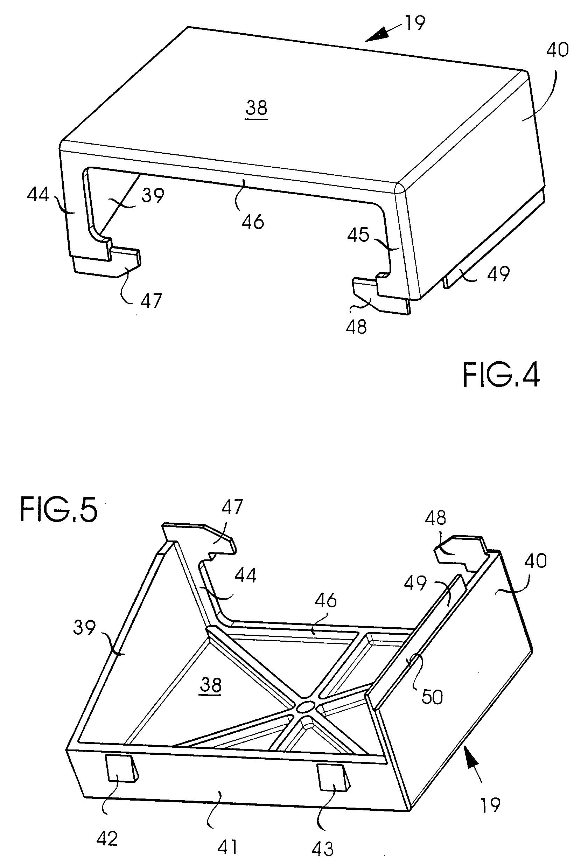

Die perspektivischen Ansichten der Abdeckkappe 19, die Figuren 4 und 5, zeigen, dass der durch Rippen versteiften rechteckförmigen Deckplatte 38 Wandelemente 39, 40 und 41 zugeordnet sind und dass an dem quer zu den beiden parallelen Wandelementen 39, 40 nach außen weisende Rastnasen 42 und 43 angeformt sind. Auf der Gegenseite des Wandelementes 41 sind zwischen den Wandelementen 39, 40 Wandschenkel 44 und 45 sowie ein schmaler Steg 46 ausgebildet. In der Verlängerung der Wandschenkel 44, 45 sind jeweils Haken 47 und 48 gegeneinander weisend ausgeformt, und zwar derart, dass sie beispielsweise nur in der halben Wandstärke der Wandschenkel 44, 45 ausgebildet sind, mit anderen Worten in bezug auf die Frontebene der Wandschenkel 44, 45 zurückversetzt ausgebildet sind. Auf diese Weise wird Bündigkeit zwischen der Rückwand 4 und den Frontflächen der Abdeckkappe 19 erzielt und ein ein Niederdrücken der Abdeckkappe 19 vermeidender Anschlag geschaffen. Letzteres gilt auch für eine am Wandelement 40 angeformte Leiste 49, das heißt, mit der beispielsweise der halben Wandstärke des Wandelementes 40 entsprechenden Leiste 49 wird ein Absatz 50 geschaffen, mittels dessen sich die Abdeckkappe 19 beim Niederdrücken auf der durch die Freisparung 20 angeschnittene Seitenwand 5 bei gleichzeitiger seitlicher Führung durch die überlappende Leiste 49 abstützbar ist. Selbstverständlich muss die Abdeckkappe 19 nicht zwingend an einer Ecke des Gehäuses 1 angebracht sein. Sie kann in Zuordnung zu einem entsprechend angeordneten Steckersockel 24 auch zwischen den rückseitigen Gehäuseecken vorgesehen werden.

Der Vollständigkeit halber sei ferner noch erwähnt, dass während oder nach dem Setzen der Stecker 23, die aus den Steckern 23 gerade herausgeführten Leitungen 22 in Richtung der Öffnung 21 umgelegt und lediglich so weit gebündelt werden, dass die Leitungen 22 zwischen den Haken 47 und 48 der Abdeckkappe 19, wenn diese montiert wird, durchtreten können. Bei der Montage der Abdeckkappe 19 werden bei gleichzeitigem Niederhalten der Leitungen 22 zunächst die, wie aus der Figur 4 ersichtlich ist, gerundeten Haken 47 und 48 an der Leiste 37 eingerenkt bzw. eingehängt und durch nachfolgendes Niederdrücken die Abdeckkappe 19 an der Leiste 36 verrastet.

## Patentansprüche

1. Fahrtschreiber mit einem flachen, quaderförmigen Gehäuse, in welchem eine Leiterplatte weitgehend formatfüllend befestigt ist und mit der Leiterplatte in Richtung der Hochachse des Gehäuses Kontaktzungen verbunden sind, wobei den Kontaktzungen ein auf der Leiterplatte befestigter, mit mehreren Steckerfassungen versehener Steckersockel zugeordnet ist und in dem Gehäuse eine den Zugang zum Steckersockel ermöglichende Freisparung ausgebildet ist und bei welchem Stecker mit geradem Abgang der mit den Kontaktbuchsen der Stecker verbundenen Leitungen Anwendung finden,
**dadurch gekennzeichnet,**
**dass** die Freisparung (20) im Gehäuse (1) derart ausgebildet ist, dass sie wenigstens in die Rückwand (4) und in die Deckelplatte (7) des Gehäuses (1) mit rechteckförmigen Ausschnitten eingreift,
**dass** eine mit dem Gehäuse (1) verbindbare Abdeckkappe (19) vorgesehen ist derart, dass nach dem Anbringen der Abdeckkappe (19) an dem Gehäuse (1) die Freisparung (20) deckelseitig abgedeckt und rückwandseitig weitgehend offen ist und
**dass** an der Abdeckkappe (19) und an dem Gehäuse (1) einander zugeordnete Haltemittel (42, 43, 36 und 47, 48, 37) derart ausgebildet sind, dass die Abdeckkappe (19) in Entnahmerichtung der Stecker (23) unlösbar mit dem Gehäuse (1) verbindbar ist.

2. Fahrtschreiber nach Anspruch 1,
**dadurch gekennzeichnet,**
**dass** innerhalb der Freisparung (20) in das Gehäuse (1) hineinragende Leisten (36 und 37) ausgebildet sind derart, dass eine erste Leiste (36) am deckelseitigen Ausschnitt der Freisparung (20) rückwandparallel und eine zweite Leiste (37) am rückwandseitigen Ausschnitt der Freisparung (20) deckelparallel angeordnet ist.

3. Fahrtschreiber nach Anspruch 1,
**dadurch gekennzeichnet,**
**dass** die Abdeckkappe (19) aus einer im wesentlichen rechteckförmigen Deckplatte (38) mit wenigstens an drei Seiten ausgeformten Wandelementen (39, 40, 41) besteht,
**dass** an dem quer zu zwei parallelen Wandelementen (39, 40) ausgebildeten Wandelement (41) nach außen weisende Rastnasen (42, 43) vorgesehen sind und
**dass** in einer zu dem die Rastnasen (43, 43) tragenden Wandelement (41) parallelen Ebene an den sich gegenüberstehenden Wandelementen (39, 40) gegeneinander weisende Haken (47, 48) angeformt sind.

4. Fahrtschreiber nach Anspruch 3,
**dadurch gekennzeichnet,**
**dass** an der einen Seite der Deckplatte (38) mit den sich gegenüberstehenden Wandelementen (39, 40, 41) in Verbindung stehende Wandschenkel (44, 45) ausgebildet sind und
**dass** die Haken (47, 48) an den Wandschenkeln (44, 45) angeformt sind.

5. Fahrtschreiber nach Anspruch 3,
**dadurch gekennzeichnet,**
**dass** wenigstens an der Innenseite der Deckplatte (38) Rippen ausgebildet sind.

6. Fahrtschreiber nach Anspruch 4,
**dadurch gekennzeichnet,**
**dass** die Haken (47, 48) in bezug auf die Frontebene der Wandschenkel (44, 45) zurückversetzt angeformt sind.

7. Fahrtschreiber nach Anspruch 4,
**dadurch gekennzeichnet,**
**dass** in der Ebene der Wandschenkel (44, 45) ein die Wandschenkel (44, 45) und die Deckplatte (38) verbindender Steg (46) ausgebildet ist.

8. Fahrtschreiber nach Anspruch 1,
**dadurch gekennzeichnet,**
**dass** die Abdeckkappe (19) und die Freisparung (20) im Gehäuse (1) derart einander zugeordnet ausgebildet sind, dass die Abdeckkappe (19) wenigstens bündig ist mit der Deckelplatte (7) des Gehäuses (1) und
**dass** zwischen der Abdeckkappe (19) und der Rückwand (4) des Gehäuses (1) eine einen losen Durchtritt der innerhalb der Abdeckkappe (19) umgelenkten Leitungen (22) ermöglichende Öffnung (21) gegeben ist.

9. Fahrtschreiber nach Anspruch 1,
**dadurch gekennzeichnet,**
**dass** für das Gehäuse (1) ein Deckelteil bestehend aus einer Deckelplatte (7), zwei Seitenwänden (5, 6) und einer Rückwand (4) vorgesehen ist.

10. Fahrtschreiber nach Anspruch 1,
**dadurch gekennzeichnet,**
**dass** die Haltemittel (42, 43, 36 und 47, 48, 37) derart ausgebildet sind, dass nach dem Zusammenfügen von Abdeckkappe (19) und Gehäuse (1), die durch die Abdeckkappe (19) niedergehaltenen Leitungen (22) eine Lagesicherung der Abdeckkappe (19) ausüben.
